# EUROPÄISCHE PATENTSCHRIFT

(11) **EP 1 766 154 B1**
(45) Veröffentlichungstag und Bekanntmachung des Hinweises auf die Patenterteilung: **17.11.2010**
(21) Anmeldenummer: 05731739.8
(22) Anmeldetag: 21.03.2005
(51) Int. Cl.: E04F 13/08, E04B 9/24

(54) **MULTIPOSITIONIERBARE WAND- ODER DECKENPANEELE**
MULTI-POSITIONABLE WALL OR CEILING PANEL
PANNEAUX DE MUR OU DE PLAFOND A POSITIONNEMENT MULTIPLE

(30) Priorität: 17.06.2004 DE 102004029233
(43) Veröffentlichungstag der Anmeldung: 28.03.2007
(73) Patentinhaber: Kronoplus Technical AG, 9052 Niederteufen (CH)
(72) Erfinder: LEOPOLDER, Christian, 01561 Lampertswalde (DE); MOEBUS, Maik, 01561 Lampertswalde (DE)
(74) Vertreter: Heselberger, Johannes
(86) Internationale Anmeldenummer: PCT/EP2005/051284
(87) Internationale Veröffentlichungsnummer: WO 2005/124052

(56) Entgegenhaltungen:
- EP-A- 0 196 672
- EP-A- 1 262 313
- EP-A- 1 359 266
- WO-A-00/28171
- WO-A-01/96689
- WO-A-02/33197
- FR-A- 2 205 961
- GB-A- 2 256 023
- US-A- 4 599 841

## Beschreibung

Die vorliegende Erfindung betrifft ein Paneel, aus einem Holzwerkstoff, das für Wand- und / oder Deckenverkleidungen geeignet ist sowie eine zugehörige Verlegemethode.

Bekannte Wand- bzw. Deckenpaneele weisen eine Nut-Federverbindung an der Längsseite auf, wodurch benachbarte gleiche Paneele formschlüssig und ineinander greifend zu Flächen zusammensetzbar sind. Die bekannten Paneele werden mit Klammern oder durch Tackern an der Wand oder Decke befestigt. Beim Tackern der Paneele, wird der optische Eindruck, den die Oberfläche der Paneele bietet, oft nachteilig gestört.

Aus dem Stand der Technik ist ferner ein Wandpaneel bekannt, an dem metallische Klammern zur Verbindung mit weiteren Paneelen befestigbar sind. Durch die Klammern kann die Beabstandung der verbundenen Paneele variiert werden. Durch die Verwendung von zusätzlichen Klammern, wird das Anbringen der Paneele zeit- und kostenaufwendig und der damit verbundene logistische Aufwand erhöht.

Aus der EP 0 196 672 A2 sind Paneele zur Verkleidung von Außenwänden von Gebäuden vorbekannt, die mit aneinander stoßenden Stirnkanten mit sich überlappenden Leisten versehen sind, die mit Ausnehmungen und einer zugehörigen Verrasterung ausgebildet sind. Die Rasterung dient dabei der Sicherung zweier ineinander gesteckter Paneele.

Das Dokument FR 2 205 961 offenbart ebenfalls Paneele mit Verbindungsmitteln, die an den Stirnseiten der Paneele angeordnet sind. Die Verbindungsmittel bestehen aus jeweils einer vorspringenden Zunge in einer Stirnseite eines Paneels und entsprechenden Ausnehmungen in den Stirnseiten des anderen zu verbindenden Paneels. Die Zunge ist mit Verrastungsstegen versehen, mit denen der Spalt zwischen zwei zusammengefügten Paneelen einstellbar ist.

Das Dokument WO 02/33197 A1 offenbart Fußbodenpaneele aus einem Holzwerkstoff mit Nut- und Federverbindungsmitteln an den Längsseiten, die in Ausführungsformen mit zwei Verrastungspunkten versehen sind, die eine besonders sichere Verriegelung zweier Paneele miteinander ermöglichen. Die Oberseite der Fußbodenpaneele ist mit einer Dekorschicht versehen.

Die Veröffentlichung EP 1 262 313 A2 zeigt ein Laminatfußbodenpaneel mit Nut- und Federverbindungselementen an den Längsseiten. Das Paneel besteht im Wesentlichen aus einer Trägerplatte, die mit einer Nutz- und Dekorlage abgedeckt ist. Die Nutz- und Dekorlage ist teilweise auch an den Nut- und Federkopplungselementen eingerichtet. Die Paneele haben keinerlei Verrastungsmöglichkeiten und in der EP'313 sind keine Angaben über eine mögliche Längsverschiebbarkeit der Paneele gemacht.

Vor dem Hintergrund der oben beschriebenen Nachteile ist es daher Aufgabe der vorliegenden Erfindung, ein Paneel mit Dekorschicht mit verbesserten Verbindungs- bzw. Verlegeeigenschaften sowie eine entsprechende Verwendung und zugehörige Verlegemethode zu schaffen, wobei insbesondere ein Ablösen der Dekorschicht möglichst vermieden werden soll.

Diese Aufgaben werden durch eine gattungsgemäße Vorrichtung mit den Merkmalen des Anspruchs 1, durch deren Verwendung gemäß Anspruch 9, eine Verlegemethode gemäß Anspruch 10 sowie ein Herstellungsverfahren gemäß Anspruch 11 gelöst. Vorteilhafte Ausgestaltungen ergeben sich aus den Unteransprüchen.

Das erfindungsgemäße Paneel für eine Wand oder Decke weist Kupplungsmittel auf. Die Kupplungsmittel sind so ausgestaltet, dass das Paneel mit weiteren Paneelen in mehreren unterschiedlichen Positionen zueinander verbunden werden kann. Beispielsweise sind es Positionen mit unterschiedlichem Abstand zwischen den Längskanten zweier parallel zueinander angeordneten Paneele. Dadurch kann erreicht werden, dass der Abstand der Paneele in Abhängigkeit der zu bedeckenden Fläche, insbesondere ohne zusätzliche Hilfsmittel variiert werden kann, um einerseits die für eine vorgegebene, zu bedeckende Fläche erforderliche Anzahl der Paneele beeinflussen zu können. Dadurch dass zusätzlich Hilfsmittel, wie Klammern, entfallen, wird der logistische Aufwand, der mit dem Lagern, Transport und der Anbringung der Paneele verbunden ist, vorteilhaft reduziert.

Andererseits kann so der optische Eindruck verändert werden, der sich aus der unterschiedlichen Beabstandung der Paneele ergibt. D.h. es können beispielsweise die Paneele dicht an dicht liegen, um bei Betrachtung eine geschlossene Fläche zu bilden oder die Paneele können im verbundenen Zustand eine zwischen den Paneelen verlaufende Vertiefung aufweisen, durch die die Paneelstruktur einer mit den Paneelen verkleideten Fläche optisch hervorgehoben wird. Die so ausgestalteten Kupplungsmittel können sowohl an der Längsseite als auch an der Schmalseite angebracht sein. Ferner können an der Schmalseite andere, d.h. herkömmliche oder auch keine Kupplungsmittel vorgesehen sein.

Bei dem erfindungsgemäßen Paneels weisen die Kupplungsmittel eine durch zwei Flanken gebildete Nut auf der einen Seite des Paneels und eine Feder auf der anderen Seite des Paneels auf. Dabei ist die Feder derart gestaltet, dass sie in die Nut eines weiteren Paneels einführbar ist. Eine Nut-Feder-Verbindung kann besonders einfach und preiswert geschaffen werden, beispielsweise durch fräsende Bearbeitung der Paneele. Eine solche Verbindung kann besonders leicht in einem kontinuierlichen Paneelherstellungsverfahren bereitgestellt werden.

Gemäß einer weiteren vorteilhaften Ausgestaltung ist eine der zwei Flanken länger. Dadurch wird einerseits erreicht, dass die Flanke für die Bearbeitung leicht zugänglich ist. So können beim Herstellungsprozess des Paneels leicht Ausnehmungen und Vorsprünge in die vorstehende Flanke eingebracht werden. Andererseits erleichtert die vorstehende Flanke das Verbinden mehrerer Paneele. Beispielsweise kann die Feder eines angewinkelten Paneels auf der vorstehenden Flanke angesetzt werden, um über diese Flanke leicht in die zugehörige Nut hinein zu gleiten. Dadurch wird das Zusammenfügen von Paneelen erleichtert. Bei der Wandmontage und Deckenmontage ist es besonders von Vorteil, eine so geschaffene Einführungshilfe für die Feder bereitzustellen, da es bei dieser Montage besonders schwer ist, das Paneel entsprechend auszurichten.

In einer Ausführungsform ist die vorstehende Flanke somit an der Unterseite des Paneels, also auf der Seite des Paneels, die bei bestimmungsgemäßer Verwendung des Paneels zur Decke oder Wand weist, angeordnet. Dadurch wird neben der oben beschriebenen vorteilhaften Wirkung der optische Eindruck der verlegten Paneele nicht durch die Kupplungselemente nachteilig beeinflusst.

Erfindungsgemäß ist wenigstens ein Element der Verriegelungsmittel an den Kupplungsmittein angeordnet. Dadurch wird erreicht, dass das Verriegelungselement zusammen mit dem Kupplungsmittel beim Herstellungsprozess in die Paneele eingebracht werden kann. Ist beispielsweise ein Verriegelungselement an der langen Flanke der Nut vorgesehen, kann darüber hinaus vorteilhaft eine leicht gewinkelte Stellung des Paneels gegenüber dieser Flanke ausreichen, um die Verriegelung unwirksam zu machen. Soll beispielsweise die Verbindung mittels Nut und Feder zu einem weiteren Paneel hergestellt werden, reicht diese gewinkelte Stellung aus, dass die Verriegelungsmittel nicht in Eingriff stehen und die Verbindungsherstellung erleichtert wird. Andererseits führt beispielsweise die gewinkelte Stellung bei verbundenen Paneelen zu einer Lösung der Verriegelung, so dass zwei Paneele in der gewinkelten Position relativ zueinander leicht getrennt werden können.

Um die angewinkelte Stellung vergleichsweise leicht einnehmen zu können, können die Kupplungsmittel in einer Ausführungsform ganz oder in berührenden Bereichen elastisch ausgebildet sein. In einer Ausführungsform sind die Ausnehmungen sowie die vorstehende Flanke an der Unterseite des Paneels, also auf der Seite des Paneels, die bei bestimmungsgemäßer Verwendung des Paneels zur Decke oder Wand weist, angeordnet. Dadurch wird der optische Eindruck der verlegten Paneele nicht durch die Verriegelungsmittel nachteilig beeinflusst.

Die Ausgestaltung des erfindungsgemäßen Paneels sieht vor, dass die Verriegelungsmittel so ausgestaltet sind, dass sie ineinander einrasten. Dadurch wird auf besonders einfache Weise eine Arretierung geschaffen, die leicht auch wieder gelöst werden kann.

In einer weiteren vorteilhaften Ausführungsform umfassen die Verriegelungsmittel ein oder mehrere Ausnehmungen und Nasen. Beispielsweise sind in einer Ausführungsform zwei Ausnehmungen und eine Nase vorgesehen. Die Nase ist im Querschnitt so gestaltet, dass sie in eine der beiden Aussparungen einzurasten vermag.

Um das Einbringen der Nase in die Aussparung zu erleichtern, kann die Nase auf der Seite, die in Verbindungsrichtung vorne liegt, im Vergleich zur gegenüberliegenden Seite stärker angewinkelt sein. Die gegenüberliegende Seite sollte so stark angewinkelt sein, dass sie in Kombination mit der jeweiligen Aussparung eine ausreichend starke Verriegelung bewirkt.

In einer weiteren Ausgestaltung können die Verriegelungsmittel darüber hinaus elastisch ausgebildet sein, um die Verriegelung zu erleichtern.

Eine weitere vorteilhafte Ausführungsform sieht vor, dass die Verriegelungsmittel durchgehend, entlang der Längskanten des Paneels verlaufen. Beispielsweise verlaufen eine oder mehrere Ausnehmungen nutenartig an der Längskante des Paneels. Dadurch können sie leicht beispielsweise durch fräsende Bearbeitung in die Paneele eingebracht werden. Folglich kann ein solch ausgestaltetes Paneel besonders leicht in einem kontinuierlichen Herstellungsprozess produziert werden. Andererseits wird aufgrund der vergleichsweise ausgedehnten Verriegelungsfläche eine besonders wirksame Verriegelung der Paneele erreicht. Beispielsweise können die Nase und die zugehörige Ausnehmung im Querschnitt vergleichsweise klein sein und trotzdem wird aufgrund der entlang des Paneels sich erstreckenden Formgebung der Nase und Ausnehmung eine ausreichend starke Verriegelung erreicht. Im Querschnitt kleine Nasen und Ausnehmungen sind insbesondere von Vorteil bei geringen Materialstärken des Paneels.

Gemäß einer weiteren Ausführungsform weisen die Verriegelungsmittel mehrere in Verbindungsrichtung der Paneele versetzte Elemente auf. Beispielsweise sind die Elemente zwei parallel entlang des Paneels, zueinander versetzt verlaufende Ausnehmungen. Diese sind in einer Ausführungsform an der Seite des Paneels vorgesehen, die die Feder aufweist. In diese Ausnehmungen vermag eine entlang des Paneels verlaufende Nase, die an der vorstehenden, die Nut bildende Flanke ausgebildet ist, alternativ einzurasten. Durch die versetzten Elemente wird besonders einfach erreicht, dass der Abstand der Paneele in Abhängigkeit der zu bedeckenden Fläche variiert werden kann, um die für eine vorgegebene, zu bedeckende Fläche erforderliche Anzahl der Paneele beeinflussen zu können. Ferner kann so der optische Eindruck verändert werden, der sich aus der unterschiedlichen Beabstandung der Paneele ergibt. D.h. es können beispielsweise die Paneele dicht an dicht liegen, indem die Nase in einer Ausführungsform in die zur Längskante entfernt liegende Ausnehmung einrastet. Es ergibt sich so eine vergleichsweise geschlossene Fläche, Alternativ können die Paneele im Vergleich zur zuvor beschriebenen Anordnung beabstandet verbunden sein und eine zwischen den Paneelen verlaufende Vertiefung aufweisen, wenn die Nase in die zur Längskante unmittelbar benachbarte Ausnehmung eingerastet wird. Dadurch wird die Paneelstruktur einer mit den Paneelen verkleideten Fläche optisch hervorgehoben.

Erfindungsgemäß sind die Kupplungsmittel und / oder Verriegelungsmittel so gestaltet, dass die Paneele im verbundenen Zustand gegeneinander in Längsrichtung verschiebbar sind.

In einer Ausführungsform sind diese beispielsweise so gestaltet, dass die Paneele schienenartig gegeneinander verschoben werden können. Dadurch wird erreicht, dass bei verbundenen Paneelen eine Längendehnung oder -Verkürzung beispielsweise bei Holzpaneelen nicht zu einer Verspannung oder gar Beschädigung der Paneele führt.

In einer weiteren Ausführungsform sind die Kupplungsmittel und / oder Verriegelungsmittel so gestaltet, dass diese wenigstens bezüglich einer Richtung Spiel aufweisen. Dadurch kann die Verschiebbarkeit gewährleistet werden bzw. der dafür notwendige Kraftaufwand reduziert werden. Ferner können Schrumpfungen sowie Dehnungen ausgeglichen werden. Ein Spiel zwischen der Nut und Feder ermöglicht, dass die oben beschriebene Schrägstellung zweier Paneele zueinander leicht eingenommen werden kann. Das Spiel kann gleichmäßig zwischen der Nut und Feder sein, alternativ kann sich die Nut mit der Eindringtiefe aufweiten. Ein Spiel zwischen den Verriegelungsmitteln dient zum Auffangen von Dehnungen und Schrumpfungen der Paneele. Ein Spiel am Ende der vorstehenden Flanke der Nut dient in einer Ausführungsform zur Befestigung einer Klammer, mit der das Paneel an der Wand oder Decke befestigt werden kann. Durch Vorsehen von Klammern zur Befestigung des Paneels, kann dieses ohne Beschädigungen der Oberfläche des Paneels, beispielsweise durch Nageln, Tackern oder Verschrauben, befestigt werden. Ferner braucht das Paneel nicht mit zusätzlichen Ausfräsungen versehen werden, um die Klammern zu befestigen.

In einer weiteren Ausgestaltung besteht das Paneel aus einer Holzfaserplatte. Dadurch ist das Paneel einerseits preiswert herzustellen. Andererseits ist es vergleichsweise sehr formbeständig, hoch belastbar und mit hoher Passgenauigkeit zu fertigen. Das Paneel kann einteilig, d.h. in einem Stück, aus einer Holzfaserplatte gefertigt sein.

Eine weitere vorteilhafte Ausführungsform sieht vor, dass das Paneel wenigstens auf einer Seite abgerundete oder gebrochene Kanten aufweist. Gebrochene Kanten im Sinne der Erfindung werden beispielsweise dadurch erreicht, dass spitzwinklige bzw. rechtwinklige Kanten durch Abfräsen mit einer oder mehreren schrägen Flächen versehen werden. Dadurch ist die Verletzungsgefahr reduziert.

In einer Ausführungsform sind die Kanten, die an die Oberseite des Paneels angrenzen, also an der Seite des Paneels, die bei bestimmungsgemößer Verwendung des Paneels von der Decke oder Wand entfernt angeordnet ist, abgerundet oder gebrochen. Gerade bei Wandpaneelen können die Verletzungsgefahr für Menschen und die Beschädigungsgefahr für Kleidung durch Vorsehen des zuvor beschriebenen Merkmals besonders vorteilhaft reduziert werden. Ferner wird dadurch erreicht, dass leichte Unterschiede in der Anordnung der Oberseite des Paneels, die beispielsweise auf Toleranzen in der Herstellung beruhen, dadurch nicht auffallen, dass die Oberseiten der Paneele nicht unmittelbar ineinander übergehen, sondern durch die gerundeten bzw. gebrochenen Kanten unterbrochen sind. Dadurch wird der Herstellungsprozess erleichtert, da beispielsweise die Toleranzen bezüglich der fräsenden Bearbeitung reduziert sind.

Erfindungsgemäß ist das Paneel wenigstens auf einer Seite mit einer Dekorschicht versehen. Beispielsweise handelt es sich um ein Dekorpapier, dass eine Holzmaserung aufweist. Das Dekorpapier kann je nach gewünschten optischen Effekt unterschiedlich gefärbt und / oder strukturiert sein. Neben dem optischen Effekt kann es dazu dienen, das Paneel vor Nässe zu schützen. Ferner kann so erreicht werden, dass eine Lackierung der Paneele unter optischen oder schützenden Gesichtspunkten nach Anbringung an einer Wand oder Decke vorteilhaft unterbleiben kann.

In einer Ausführungsform ist die Dekorschicht im Wesentlichen auf die Oberseite des Paneels, also an der Seite des Paneels, die bei bestimmungsgemäßer Verwendung des Paneels von der Decke oder Wand entfernt angeordnet ist, beschränkt.

Erfindungsgemäß sind die Kupplungsmittel teilweise von der Dekorschicht bedeckt. Dadurch wird erreicht, dass die Dekorschicht zusätzlich durch die Kupplungsmittel fixiert ist. Ein Ablösen der zumeist aufgeklebten Dekorschicht kann so zusätzlich vermieden werden. Die Gleiteigenschaft der Dekorschicht ist erfindungsgemäß gegenüber aneinandergrenzenden Oberflächen aus holzartigen Werkstoffen verbessert, da sich dies vorteilhaft auf die Längsverschiebbarkeit der verbundenen Paneele auswirkt.

Das erfindungsgemäße Paneel in einer der zuvor beschriebenen Ausgestaltungen wird vorteilhaft zur Verkleidung von Wänden und / oder Decken verwendet.

Die erfindungsgemäße Verlegemethode sieht vor, dass in einem ersten Schritt ein erstes Paneel in Eingriff mit einem zweiten Paneel gebracht wird und dabei die Paneele eine gewinkelte Position zueinander einnehmen. In einem zweiten Schritt wird wenigstens eines der Paneele, insbesondere das erste Paneel, in eine gemeinsame Ebene verschwenkt und dadurch eine Verriegelung der Paneele untereinander erreicht. Durch die so erreichte Verriegelung können die Paneele vorteilhaft einfach verbunden werden. Beispielsweise kann das erste Paneel eine durch zwei Flanken gebildete Nut aufweisen, in die die Feder des zweiten Paneels einbringbar ist. Einer der Flanken steht beispielsweise vor. So wird die Feder des angewinkelten Paneels auf der vorstehenden Flanke angesetzt, um über diese Flanke leicht in die zugehörige Nut gleitend eingebracht zu werden. In dieser gewinkelten Stellung stehen die Verriegelungsmittel der Paneele nicht in Eingriff und behindern so nicht die Verbindungsherstellung. Durch Verschwenken der Paneele in eine Ebene kommen die Verriegelungsmittel in Eingriff, rasten beispielsweise untereinander ein und verriegeln so die Verbindung der Paneele.

Die Erfindung betrifft ferner ein Herstellungsverfahren für ein Paneel, gemäß einer der zuvor beschriebenen Ausführungsformen, wobei das Paneel in einem ersten Schritt wenigstens an den Längsseiten mit abgerundeten oder gebrochenen Kanten versehen wird, in einem zweiten Schritt das Paneel auf einer Seite mit einer Dekorschicht versehen wird und in einem dritten Schicht die Kupplungsmittel und / oder Verriegelungsmittel in das Paneel gefräst werden. Dadurch kann das Paneel in einer der zuvor beschriebenen Ausführungsformen einfach und preiswert hergestellt werden.

In einer weiteren vorteilhaften Ausgestaltung liegt das Paneel beim dritten Schritt mit der Seite auf, die nicht mit einer Dekorschicht versehen ist. Beispielsweise liegt das Paneel auf einer Auflagefläche der Fräsmaschine auf. Dadurch wird erreicht, dass vergleichsweise empfindliche Dekorschicht nicht durch die Bearbeitung beschädigt wird.

### Zu den Figuren:

Bei den abgebildeten Figuren handelt es sich um Beispiele, die das Verständnis der Erfindung erleichtern sollen.

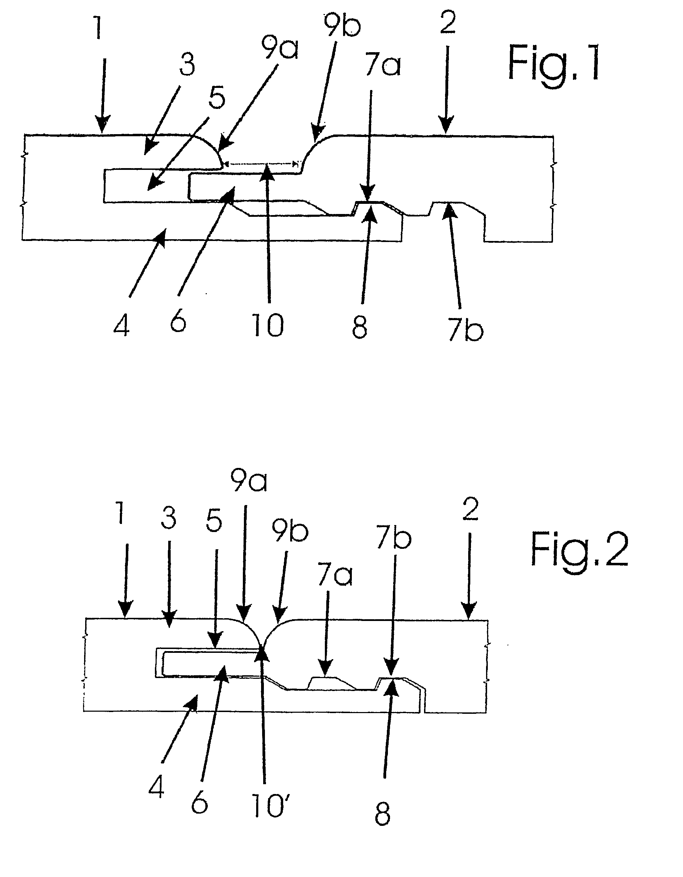

Figur 1 zeigt zwei Paneele 1, 2 in Schnittansicht, die in einer ersten Position verbunden sind. Das Paneel 1 weist zwei Flanken 3, 4 auf durch die eine dazwischen liegende Nut 5 ausgebildet wird. In die Nut 5 ist die Feder 6 des zweiten Paneels 2 einbringbar. Die Nut 5 und die Feder 6 bilden die Kupplungsmittel der Paneele 1, 2. Die Flanke 4 des Paneels 1 steht weiter vor als die Flanke 3. An der äußeren Kante des Paneels 1 bzw. der Flanke 4 ist eine Nase 8 vorgesehen, die längs des Paneels 1 verläuft. Die Nase 8 ist in ein der beiden Ausnehmungen 7a bzw. 7b einrastbar. Diese bilden die Verriegelungsmittel der Paneele 1, 2 aus. Die Ausnehmungen 7a, 7b erstrecken sich entlang der Längskante des Paneels 2 und sind zueinander parallel angeordnet. Die Ausnehmung 7a ist in nächster Nachbarschaft zur Kante des Paneels 2 angeordnet, während die Ausnehmung 7b weiter entfernt zur Kante des Paneels 2 angeordnet ist. In Figur 1 ist gezeigt, wie die Nase 8 in die zur Kante des Paneels 2 nah angeordnete Ausnehmung 7a einrastet und so die Paneele 1, 2 untereinander verriegelt. Dadurch werden die Paneele 1, 2 mit Abstand zueinander verriegelt und die von den Paneelen 1, 2 abgedeckte Fläche wird vergrößert. Zwischen den Kanten 9a und 9b bildet sich so eine Vertiefung 10 aus, wobei der Abstand zwischen den Kanten beispielsweise etwa 7,5 mm beträgt. Die Vertiefung 10 verläuft entlang der Paneele 1, 2 und trägt zu deren optischen Eindruck bei. Die Kanten 9a und 9b sind abgerundet. In der Figur 1 sind die unteren Seiten der Paneelen 1 und 2 diejenigen Seiten, die bei Anbringung an einer Wand oder Decke an der Wand bzw. Decke anliegen.

Figur 2 zeigt die zwei Paneele 1, 2 der Figur 1 in Schnittansicht, die in einer zweiten Position verbunden sind. Das Paneel 1 weist zwei Flanken 3, 4 auf durch die eine dazwischen liegende Nut 5 ausgebildet wird. In die Nut 5 ist die Feder 6 des zweiten Paneels 2 einbringbar. Die Nut 5 und die Feder 6 bilden die Kupplungsmittel der Paneele 1, 2. Die Flanke 4 des Paneels 1 steht weiter vor als die Flanke 3. An der äußeren Kante des Paneels 1 bzw, der Flanke 4 ist eine Nase 8 vorgesehen, die längs des Paneels 1 verläuft. Die Nase 8 ist in ein der beiden Ausnehmungen 7a bzw. 7b einrastbar. Diese bilden die Verriegelungsmittel der Paneele 1, 2 aus. Die Ausnehmungen 7a, 7b erstrecken sich entlang der Längskante des Paneels 2 und sind zueinander parallel angeordnet. Die Ausnehmung 7a ist in nächster Nachbarschaft zur Kante des Paneels 2 angeordnet, während die Ausnehmung 7b weiter entfernt zur Kante des Paneels 2 angeordnet ist. In Figur 2 ist gezeigt, wie die Nase 8 in die zur Kante des Paneels 2 entfernt angeordnete Ausnehmung 7b einrastet und so die Paneele 1, 2 untereinander verriegelt. Dadurch werden die Paneele 1, 2 eng aneinander anliegend verriegelt, und die von den Paneelen 1, 2 abgedeckte Fläche ist vergleichsweise klein. Zwischen den unmittelbar aneinandergrenzenden Kanten 9a und 9b bildet sich so eine Vertiefung 10' aus. Die Vertiefung 10' verläuft entlang der Paneele 1, 2 und trägt zu deren optischen Eindruck bei. Die Kanten 9a und 9b sind abgerundet. In der Figur 2 sind wiederum die unteren Seiten der Paneelen 1 und 2 diejenigen Seiten, die bei Anbringung an einer Wand oder Decke an der Wand bzw. Decke anliegen.

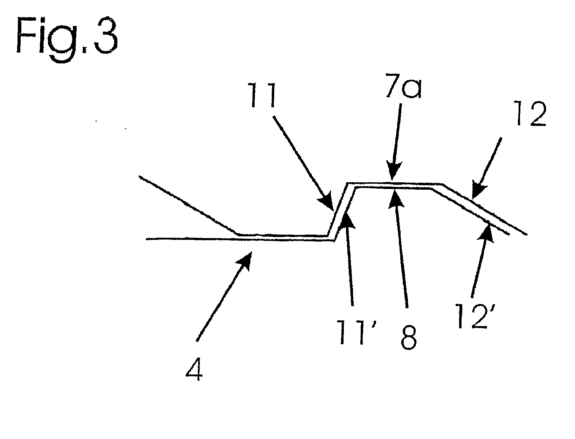

Figur 3 ist eine Detailansicht der Figur 1. Die Nase 8 der Flanke 4 ist in die Ausnehmung 7a eingerastet und verriegelt so zwei Paneele gegeneinander. Die Nase 8 ist im Querschnitt so gestaltet, dass sie in die Aussparung 7a einrastet. Um das Einbringen der Nase 8 in die Aussparung 7a zu erleichtern, ist die Nase 8 auf der Seite 12', die in Verbindungsrichtung vorne liegt, im Vergleich zur gegenüberliegenden Seite 11' stärker angewinkelt. Entsprechendes gilt für die korrespondierenden Seiten 11 bzw. 1 2 der Ausnehmung 7a. Die Seiten 11 bzw. 11' sind so stark angewinkelt, dass sie einerseits in Kombination mit der Aussparung eine ausreichend starke Verriegelung bewirken, andererseits ein Verwinkeln der Paneele zueinander leicht möglich ist und so die Verriegelung durch die Elemente 7a bzw. 8 leicht aufgehoben werden kann. Die Verriegelungselemente 7a, 8 haben in dieser Ausführungsform Spiel, um ein Verschieben der Paneele gegeneinander zu ermöglichen. Das Spiel beträgt beispielsweise 0,2 mm bis 0,5 mm.

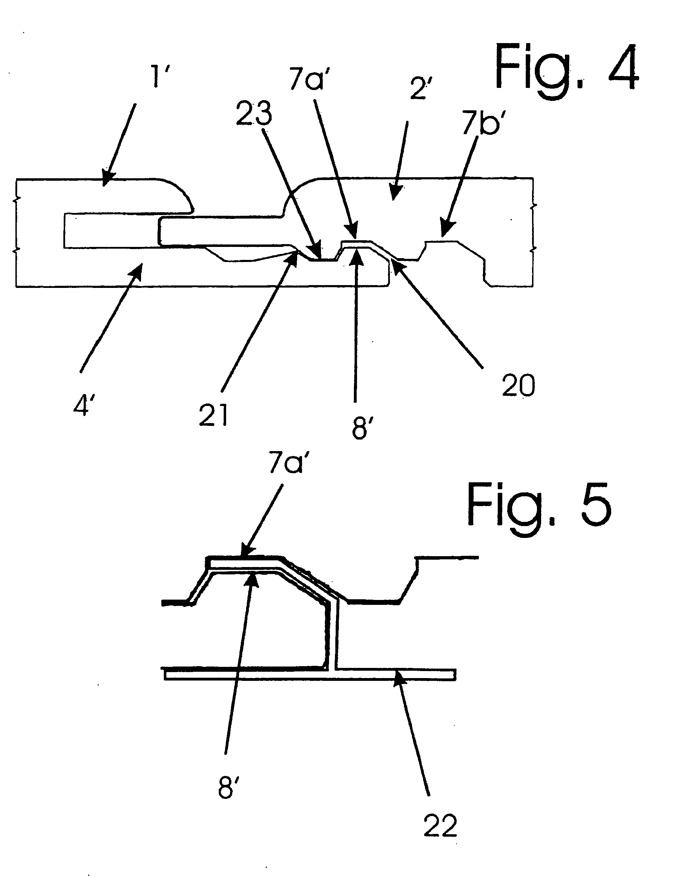

Figur 4 zeigt zwei Paneele 1', 2' in Schnittansicht, die in zwei Positionen verbindbar sind, von denen eine gezeigt ist. Das Paneel 1' weist zwei Flanken auf, durch die eine dazwischen liegende Nut ausgebildet wird. In die Nut ist die Feder des zweiten Paneels 2' einbringbar. Die Nut und die Feder bilden die Kupplungsmittel der Paneele 1', 2'. Die Flanke 4' des Paneels 1' steht weiter vor als die andere Flanke. An der äußeren Kante des Paneels 1' bzw. der Flanke 4' ist eine Nase 8' vorgesehen, die längs des Paneels 1' verläuft. Die Nase 8' ist jeweils in ein der beiden Ausnehmungen 7a', 7b' der Paneele 2' einrastbar. Hier ist diese in die

Ausnehmung 7a' eingerastet. Diese bilden die Verriegelungsmittel der Paneele 1', 2' aus. Die Ausnehmungen 7a', 7b' erstrecken sich entlang der Längskante des Paneels 2' und sind zueinander parallel angeordnet. Die Ausnehmung 7a' ist in nächster Nachbarschaft zur Kante des Paneels 2' angeordnet, während die Ausnehmung 7b' weiter entfernt zur Kante des Paneels 2' angeordnet ist. Ist die Nase 8' in die Ausnehmung 7a' bzw. 7b' eingerastet, verbleibt ein Spiel 20. Dieses Spiel 20 dient u.a. zur Aufnahme der Klammer 22, die in Figur 5 in Detailansicht gezeigt ist. Diese Klammer 22 ermöglicht die vereinfachte Befestigung des Wandpaneels 1' und damit auch des Paneels 2' an einer Wand oder Decke. Damit das Spiel 20 nicht zu einer losen Verriegelung in Richtung der Nut-Feder-Verbindung führt, weisen die Verriegelungsmittel ferner eine zusätzliche Nase 21 an der Flanke 4' des Paneels 1' auf, die sich mit einer vorstehenden Nase 23 des Paneels 2' verriegelt.

## Patentansprüche

1. Paneel (1, 1', 2, 2') aus einem Holzwerkstoff für eine Wand oder Decke mit Kuppiungsmittein (3, 4, 4', 5, 6) und Verriegeiungsmittein (7a, 7b, 7a', 7b', 8, 8'), welches Paneel an wenigstens einer Seite mit einer Dekorschicht versehen ist, wobei die Kupplungsmittel so ausgestaltet sind, dass das Paneel (1, 1') mit weiteren gleichartig ausgebildeten Paneelen (2, 2') in mehreren unterschiedlichen Positionen zueinander verbindbar ist und wobei die Kupplungsmittel eine durch zwei Flanken (3, 4, 4') gebildete Nut (5) auf der einen Seite des Paneels (1, 1') aufweisen und wobei die Kupplungsmittel eine Feder (6) auf der gegenüberliegenden Seite des Paneels (2') aufweisen, die derart gestaltet ist, dass sie in der Nut (5) des weiteren gleichartig ausgebildeten Paneels (1, 1', 2, 2') einführbar ist, und wobei wenigstens ein Element der Verriegelungsmittel (7a, 7b, 7a', 7b', 8, 8') an den Kupplungsmittein (3, 4, 4', 5, 6) angeordnet ist, welche Verrieglungsmittel (7a, 7b, 7a', 7b', 8, 8') so ausgestaltet sind, dass sie ineinander einrasten und in Verbindungsrichtung mindestens zwei Rastpositionen möglich sind; **dadurch gekennzeichnet, dass** die Kupplungsmittel und/oder Verriegelungsmittel so gestaltet sind, dass die Paneele in verbundenem Zustand gegeneinander in Längsrichtung verschiebbar sind und die aus Nut (5) und Feder (6) bestehenden Kupplungsmittel zumindest teilweise von der Dekorschicht bedeckt sind, und die Gleiteigenschaft der Dekorschicht gegenüber aneinandergrenzenden Oberflächen aus holzartigen Werkstoffen verbessert ist, um sich vorteilhaft auf die Längsverschiebbarkeit der verbundenen Paneele auszuwirken.

2. Paneel nach dem vorhergehenden Anspruch, wobei eine der Flanken (4) länger ist.

3. Paneel nach einem der vorhergehenden Ansprüche, wobei die Verriegelungsmittel (7a, 7b, 7a', 7b', 8, 8') ein oder mehrere Ausnehmungen und Nasen umfassen.

4. Paneel nach einem der vorhergehenden Ansprüche, wobei die Verriegelungsmittel ('7a, 7b, 7a', 7b', 8, 8') durchgehend entlang der Längskanten des Paneels verlaufen.

5. Paneel nach einem der vorhergehenden Ansprüche, wobei die Verriegelungsmittel (7a, 7b, 7a', 7b', 8, 8') mehrere in Verbindungsrichtung der Paneele versetzte Elemente aufweisen.

6. Paneel nach einem der vorhergehenden Ansprüche, wobei die Kupplungsmittel und/oder Verriegelungsmittel so gestaltet sind, dass diese wenigstens bezüglich einer Richtung Spiel (20) aufweisen.

7. Paneel nach einem der vorhergehenden Ansprüche, welches aus einer Holzfaserplatte besteht.

8. Paneel nach einem der vorhergehenden Ansprüche, welches wenigstens auf einer Seite abgerundete oder gebrochene Kanten (9a, 9b) aufweist.

9. Verwendung des Paneels nach einem der vorhergehenden Vorrichtungsansprüche 1 bis 8 zur Verkleidung von Wänden oder Decken.

10. Verfahren zur Verlegung mehrerer Holzpaneele gemäß einem der vorhergehenden Vorrichtungsansprüche 1 bis 8, wobei in einem ersten Schritt ein erstes Paneel in Eingriff mit einem zweiten Paneel gebracht wird und dabei die Paneele eine gewinkelte Position zueinander einnehmen, wobei in einem zweiten Schritt wenigstens eines der Paneele, insbesondere das erste Paneel, in eine gemeinsame Ebene verschwenkt wird und **dadurch** eine Verriegelung der Paneele untereinander erreicht wird.

11. Herstellungsverfahren für ein Paneel nach einem der Ansprüche 1 bis 8, wobei das Paneel nach einem ersten Schritt wenigstens an den Längsseiten mit abgerundeten oder gebrochenen Kanten versehen wird, in einem zweiten Schritt das Paneel mit einer Dekorschicht versehen wird und in einem dritten Schritt die Kupplungsmittel und/oder Verriegelungsmittel in das Paneel gefräst werden.

12. Herstellungsverfahren nach dem vorhergehenden Anspruch, wobei das Paneel beim dritten Schritt mit der Seite aufliegt, die ohne Dekorschicht ist.

## Claims

1. Panel (1, 1', 2, 2') made from wood material for a wall or a ceiling with coupling means (3, 4, 4', 5, 6) and locking means (7a, 7b, 7a', 7b', 8, 8'), which panel is provided on at least one side with a decor layer, wherein the coupling means are formed such that the panel (1, 1') is connectable with further similar formed panels (2, 2') in multiple different positions with respect to each other and wherein the coupling means are provided with a groove (5) formed by two lips (3, 4, 4') on the one side of the panel (1, 1'), and wherein the coupling means comprise a tongue (6) on the other side of the panels (2'), which is formed such that it can be inserted into the groove (5) of the further similar formed panel (1, 1', 2, 2'), and wherein at least one element of the locking means (7a, 7b, 7a', 7b', 8, 8') is formed such that they engage with each other and that at least two locking positions in coupling direction are possible, **characterized in that** the coupling means and/or locking means are shaped such that the panels in connected condition are slidable with respect to each other in longitudinal direction and that the coupling means consisting of groove (5) and tongue (6) are at least partially covered with a decor layer and that the sliding properties of the décor layer is improved compared to adjacent surfaces of wooden materials, to have a positive effect on the longitudinal slidability of the connected panels.

2. Panel according to the preceding claim, wherein one of the lips (4) is longer.

3. Panel according to anyone of the preceding claims, wherein the locking means (7a, 7b, 7a', 7b', 8, 8') comprise one or more recesses and projections.

4. Panel according to anyone of the preceding claims, wherein the locking means (7a, 7b, 7a', 7b', 8, 8') extend continuously along the longitudinal edges of the panel.

5. Panel according to anyone of the preceding claims, wherein the locking means (7a, 7b, 7a', 7b', 8, 8') comprise multiple elements, offset in the connecting direction of the panels.

6. Panel according to any of the preceding claims, wherein the coupling means and / or locking means are shaped such that they comprise at least with respect to one direction a play (20).

7. Panel according to anyone of the preceding claims, which consists of a wooden fiberboard.

8. Panel according to anyone of the preceding claims, which comprises at least on one side rounded or cutoff edges (9a, 9b).

9. Use of the panels according to anyone of the preceding apparatus claims 1 - 8, for a covering of walls or ceiling.

10. Method for the laying of several wooden panels according to any of the preceding apparatus claims 1 - 8, wherein in a first step a first panel is brought in engagement with a second panel and the panels are set in an angled position with respect to each other, wherein in a second step at least one of the panels, in particular the first panel, is pivoted into a common plane and a locking of the panels is thus achieved.

11. Method for production of a panel according to anyone of the preceding claims 1 - 8, wherein the panel is provided in a first step at least at the longitudinal sides with rounded or cutoff edges and in a second step the panel is provided with a décor layer, and in a third step the coupling means and/or locking means are milled into the panel.

12. Method for manufacturing according to the preceding claim, wherein the panel rests during the third step on the side, which is not provided with a décor layer.

## Revendications

1. Panneau (1, 1', 2, 2') en matériau à base de bois pour un mur ou un plafond, comprenant des moyens d'accouplement (3, 4, 4', 5, 6) et des moyens de verrouillage (7a, 7b, 7a', 7b', 8, 8'), lequel panneau est pourvu au moins d'un côté d'une couche décorative, les moyens d'accouplement étant conformés de façon que le panneau (1, 1') puisse être assemblé avec d'autres panneaux (2, 2') de conformation identique dans plusieurs positions différentes les uns par rapport aux autres, et les moyens d'accouplement comportant une rainure (5) formée par deux flancs (3, 4, 4') d'un côté du panneau (1, 1'), et les moyens d'accouplement comportant une languette (6) du côté opposé du panneau (2'), laquelle est conformée de façon à pouvoir être introduite dans la rainure (5) de l'autre panneau (1, 1', 2, 2') de conformation identique, et au moins un élément des moyens de verrouillage (7a, 7b, 7a', 7b', 8, 8') étant disposé sur les moyens d'accouplement (3, 4, 4', 5, 6), lesquels moyens de verrouillage (7a, 7b, 7a', 7b', 8, 8') sont conformés de façon à s'emboîter les uns dans les autres et qu'au moins deux positions d'emboîtement soient possibles dans la direction d'assemblage, **caractérisé en ce que** les moyens d'accouplement et/ou les moyens de verrouillage sont conformés de façon qu'à l'état assemblé les panneaux puissent coulisser l'un par rapport à l'autre en direction longitudinale, que les moyens d'accouplement composés de la rainure (5) et de la languette (6) soient recouverts au moins partiellement par la couche décorative, et que les propriétés de glissement de la couche décorative par rapport aux surfaces contiguës en matériaux à base de bois soient améliorées pour favoriser la possibilité de coulissement longitudinal des panneaux assemblés.

2. Panneau selon la revendication précédente, dans lequel un des flancs (4) est plus long.

3. Panneau selon une des revendications précédentes, dans lequel les moyens de verrouillage (7a, 7b, 7a', 7b', 8, 8') comprennent un ou plusieurs évidements et talons.

4. Panneau selon une des revendications précédentes, dans lequel les moyens de verrouillage (7a, 7b, 7a', 7b', 8, 8') s'étendent sans interruption le long des arêtes longitudinales du panneau.

5. Panneau selon une des revendications précédentes, dans lequel les moyens de verrouillage (7a, 7b, 7a', 7b', 8, 8') comportent plusieurs éléments décalés dans la direction d'assemblage des panneaux.

6. Panneau selon une des revendications précédentes, dans lequel les moyens d'accouplement et/ou les moyens de verrouillage sont conformés de façon à présenter un jeu (20) au moins dans une direction.

7. Panneau selon une des revendications précédentes, lequel est constitué d'une plaque en fibres de bois.

8. Panneau selon une des revendications précédentes, lequel comporte, au moins d'un côté, des arêtes arrondies ou coupées (9a, 9b).

9. Utilisation du panneau selon une des revendications précédentes 1 à 8 pour revêtir des murs ou des plafonds.

10. Procédé de pose de plusieurs panneaux en bois selon une des revendications de dispositif précédentes 1 à 8, selon lequel, dans une première étape, un premier panneau est amené en prise avec un deuxième panneau, les panneaux prenant à cette occasion une position coudée l'un par rapport à l'autre, et, dans une deuxième étape, au moins un des panneaux, en particulier le premier panneau, est basculé dans un plan commun afin de réaliser ainsi un verrouillage des panneaux entre eux.

11. Procédé de fabrication d'un panneau selon une des revendications 1 à 8, selon lequel, dans une première étape, le panneau est pourvu d'arêtes arrondies ou coupées au moins sur les côtés longitudinaux, dans une deuxième étape le panneau est pourvu d'une couche décorative et, dans une troisième étape, les moyens d'accouplement et/ou les moyens de verrouillage sont fraisés dans le panneau.

12. Procédé de fabrication selon la revendication précédente, selon lequel, lors de la troisième étape, le panneau repose sur le côté dépourvu de couche décorative.
